# EUROPÄISCHE PATENTSCHRIFT

(11) **EP 3 534 019 B1**
(45) Veröffentlichungstag und Bekanntmachung des Hinweises auf die Patenterteilung: **22.09.2021**
(21) Anmeldenummer: 18159201.5
(22) Anmeldetag: 28.02.2018
(51) Int. Cl.: F16B 19/10, F16B 21/16

(54) **KUGELSPERRBOLZEN**
BALL-DETENT QUICK-RELEASE PIN
AXE DE VERROUILLAGE A BILLES

(43) Veröffentlichungstag der Anmeldung: 04.09.2019
(73) Patentinhaber: HENSOLDT Sensors GmbH, 82024 Taufkirchen (DE)
(72) Erfinder: Stehle, Nikolaus, 88048 Friedrichshafen (DE); Biell, Mark, 88048 Friedrichshafen (DE); Würker, Sven, 78357 Mühlingen (DE); Raible, Armin, 88048 Friedrichshafen (DE)
(74) Vertreter: LifeTech IP Spies & Behrndt Patentanwälte PartG mbB

(56) Entgegenhaltungen:
- GB-A- 1 288 076
- US-A- 3 046 827
- US-A- 3 068 737
- US-A1- 2008 056 843

## Beschreibung

Die vorliegende Erfindung bezieht sich auf einen Kugelsperrbolzen, ein Verbindungssystem und einen Flugdatenschreiber und insbesondere auf einen Kugelsperrbolzen mit zwei Öffnungsvarianten.

### Hintergrund

Für viele Anwendungen besteht ein Bedarf nach Verbindungssystemen, die es erlauben, die verbundenen Komponenten auf zwei unterschiedlichen Arten voneinander zu lösen. Beispielsweise werden in der zivilen und militärischen Luftfahrt absprengbare Flugdatenschreiber genutzt, die sich im Einsatzfall automatisch von einem Flugzeug lösen sollen, für Wartungs- und Servicezwecke aber auch manuell zu lösen sind.

Verbindungssysteme für solche Flugdatenschreiber sollen möglichst die folgenden Eigenschaften haben:
(i) Es soll sofort erkennbar sein, in welchem Zustand sich der Verschluss befindet. Daher soll eine vorliegende Stellung ("offen/geschlossen") von außen sichtbar und überprüfbar sein.
(ii) Eine Detektion eines Öffnungsvorgangs soll für eine Elektronik durch einen Schalter oder Drehgeber möglich sein (zum Beispiel offen, geschlossen oder wird gleich geöffnet).
(iii)Es soll die Möglichkeit bestehen, den Verschluss werkzeuglos, mit Standardwerkzeugen oder auch nur mit Spezialwerkzeugen zu betätigen.
(iv)Alle zu wartenden Teile wie beispielsweise die Mechanik, ein Gasgenerator die Steuerelektronik sollen sich auf einer Seite des Verbindungssystems befinden, um sie bei Bedarf schnell und einfach auszutauschen.

Diese Anforderungen werden nur unzureichend von bekannten Verbindungssysteme erfüllt.

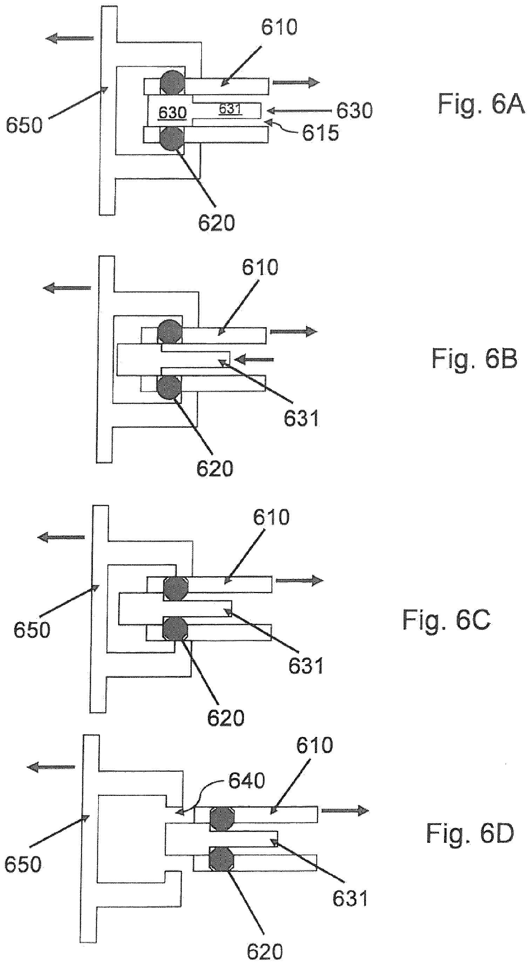

Die **Fig. 6A-6D** zeigen beispielhaft einen konventionellen Kugelsperrbolzen, der bei konventionellen Befestigungssystemen zum Einsatz kommen kann. Der Kugelsperrbolzen umfasst ein hülsenförmiges Basiselement 610, das einen Hohlraum 615 definiert, und einen stufenförmigen Bolzen 630. Der stufenförmige Bolzen 630 ist in dem Hohlraum 615 axial beweglich und weist in einem ersten axialen Abschnitt 631 einen Durchmesser auf, der kleiner ist als in einem zweiten axialen Abschnitt 632, wo der Durchmesser des Bolzens 630 im Wesentlichen gleich zu einem Innendurchmesser des Hohlraumes 615 ist.

Das hülsenförmige Basiselement 610 umfasst Öffnungen in radialer Richtung, die jeweils eine radial bewegliche Kugel 620 aufnehmen. Die Kugeln 620 haben einen Durchmesser, der so gewählt ist, dass die Kugeln 620 im zweiten axialen Abschnitt 632 radial über eine Außenoberfläche des Basiselementes 610 hinausragen. In dem ersten axialen Abschnitt 631 ist der Durchmesser des Bolzens 630 soweit verringert, dass die Kugeln 620 sich bei einer axialen Verschiebung des Bolzens 630 radial soweit nach innen bewegen, dass sie nicht mehr (oder nur unwesentlich) radial aus dem Hülsenelement 610 hinausragen. Auf diese Weise wird es möglich, dass das Hülsenelement 610 in axialer Richtung aus einer Öffnung eines Gegenstückes (Gegenstelle) 650 herausgezogen werden kann, wenn der Bolzen 630 entsprechend axial verschoben wird (d.h. wenn die Kugeln 620 sich in dem ersten axialen Abschnitt 631 befinden).

Fig. 6A zeigt dementsprechend die geschlossene Position, in der der Bolzen 630 verhindert, dass die Kugeln 620 sich nach innen bewegen können. Die Halterung für eine Gegenstelle 650 kann sich daher von dem Basiselement 610 nicht lösen. Wird der Bolzen 630 nach links bewegt, so gibt die Verjüngung (erster axialer Abschnitt 631) die Kugeln 620 frei (siehe Figur 6B), sodass sie sich nach innen bewegen können. Als Resultat wird die Gegenstelle 650 freigegeben und das Basiselement 610 kann herausgezogen werden. Dies ist in der Fig. 6C dargestellt. Schließlich wird, wie in der Fig. 6D gezeigt, die Gegenstelle 650 mit der Öffnung 640 von dem Basiselement 610 getrennt. Die Montage erfolgt in umgekehrter Reihenfolge.

US 3,046,827 A offenbart einen bekannten Kugelsperrbolzen mit Kugelelementen, die lateral jenseits einer äußeren Oberfläche eines Schaftteiles bewegbar sind und somit ein Lösen des Sperrbolzens erlaubt. US 3,068,737 offenbart einen Kugelsperrbolzen, der durch eine axiale Verschiebung lösbar ist, und US 2008/056843 A1 offenbart einen Kugelsperrbolzen, der durch eine Drehbewegung lösbar ist.

Die oben genannten Anforderungen werden von dem konventionellen Kugelsperrbolzen nur unzureichend erfüllt. So kann die Arretierung bei dem konventionellen Kugelsperrbolzen nur auf eine Weise aufgehoben werden, und zwar durch Verschiebung des Bolzens 630. Außerdem ist der Zustand von außen nicht sofort erkennbar.

Daher ein Bedarf nach weiteren Befestigungssystemen.

### Kurzbeschreibung der Erfindung

Zumindest ein Teil der oben genannten Probleme wird durch einen erfindungsgemäßen Kugelsperrbolzen nach Anspruch 1 und ein Verbindungssystem nach Anspruch 5 gelöst. Die abhängigen Ansprüche beziehen sich auf vorteilhafte Weiterbildungen der Gegenstände der unabhängigen Ansprüche.

Die vorliegende Erfindung bezieht sich auf einen Kugelsperrbolzen, der geeignet ist zum Arretieren (z.B. eines Flugdatenschreibers) an einer Gegenstelle, wobei die Gegenstelle eine Öffnung aufweist. Der Kugelsperrbolzen umfasst: ein hülsenförmiges Basiselement, zumindest eine Kugel und ein Arretierelement. Das hülsenförmige Basiselement definiert einen Hohlraum in einer axialen Richtung und umfasst in radialer Richtung zumindest eine Kugelöffnung, wobei das hülsenförmige Basiselement in die Öffnung der Gegenstelle in axialer Richtung einführbar ist. Die zumindest eine Kugel befindet sich zumindest teilweise in der Kugelöffnung und weist eine Form auf, die eine radiale Bewegung in der Kugelöffnung ermöglicht. Das Arretierelement ist in dem Hohlraum relativ zu dem Basiselement zwischen einer ersten Winkelstellung und einer zweiten Winkelstellung drehbar und weist eine Form auf, sodass die zumindest eine Kugel in der ersten Winkelstellung weiter aus der Kugelöffnung herausragt als in der zweiten Winkelstellung. Die herausragende zumindest eine Kugel blockiert somit ein Herausziehen des hülsenförmigen Basiselementes in der ersten Winkelstellung und ermöglicht das Herausziehen in der zweiten Winkelstellung.

Zur Befestigung des hülsenförmigen Basiselementes in der Öffnung der Gegenstelle gibt es zwei Möglichkeiten: Zum einen ist es möglich, dass die Kugel sich nicht vollständig durch die Kugelöffnung hindurch bewegen kann, weil z. B. die Kugelöffnung in dem Basiselement einen Anschlag für die Kugel definiert (z.B. einen verjüngenden Durchmesser aufweist). Somit kann die Kugel zwar teilweise aus dem Basiselement hervorragen, sich jedoch nicht vollständig hindurch bewegen. In diesem Fall braucht die Gegenstelle lediglich eine Öffnung bereitzustellen, durch die das hülsenförmige Basiselement eingeführt werden kann und die einen solchen Durchmesser aufweist, dass das Basiselemente nach der Blockade nicht mehr herausgezogen werden kann. Eine zweite Möglichkeit besteht darin, dass die Kugelöffnung einen Durchmesser aufweist, der zwar ein vollständiges Hindurchbewegen erlaubt (oder erlauben kann). Das Herausfallen der Kugel aus dem hülsenförmigen Basiselement wird aber dadurch verhindert, dass die Gegenstelle ein röhrenförmiges Teil bereitstellt, das einen Anschlag für die Kugel bildet. Die Kugel kann also aus dem Basiselement nur soweit herausragen, bis es an die Innenoberfläche des röhrenförmigen Teiles anstößt. Das röhrenförmige Teil kann dann an einem Endabschnitt verengt sein, um dort die Öffnung zu bilden, die einen kleinerem Durchmesser aufweist als der Innendurchmesser des röhrenförmigen Teiles.

Die Erfindung soll nicht auf eine Möglichkeit eingeschränkt werden.

Optional umfasst das Arretierelement zumindest eine Ausnehmung, um die Kugel in der zweiten Winkelstellung aufzunehmen, oder zumindest eine Erhebung, um die Kugel in der ersten Winkelstellung radial nach außen zu drücken.

Das Arretierelement umfasst einen Bolzen, der in dem Hohlraum des hülsenförmigen Basiselements axial verschiebbar ist (z. B. zwischen einer ersten Position und einer zweiten Position) und eine Vertiefung in einem ersten axialen Abschnitt aufweist, sodass die zumindest eine Kugel auf eine axiale Verschiebung aus der ersten Winkelstellung des Arretierelementes in die Vertiefung des ersten axialen Abschnitts gelangt. Damit ist das hülsenförmige Basiselement aus der Gegenstelle ebenfalls herziehbar. Auf diese Weise ergeben sich zwei Möglichkeiten, dass Basiselement von der Gegenstelle zu lösen. Die erste Möglichkeit besteht darin, das Arretierelement entsprechend zu drehen, sodass die Kugel durch die Ausnehmung aufgenommen wird. Die zweite Möglichkeit besteht darin, dass das Arretierelement axial verschoben wird, sodass die Kugel sich in die Vertiefung hinein bewegt und somit ebenfalls ein Lösen des Basiselementes in der Öffnung der Gegenstelle ermöglicht wird.

Optional umfasst die zumindest eine Kugel mehrere Kugeln und das hülsenförmige Basiselement umfasst entlang des Umfanges mehrere Kugelöffnungen, um jeweils eine Kugel aufzunehmen. Das Arretierelement umfasst zu jeder Kugel jeweils eine zugehörige Ausnehmung, um die jeweilige Kugel in der zweiten Winkelstellung aufzunehmen.

Optional umfasst das Arretierelement einen stufenförmigen Bolzen mit einem ersten axialen Abschnitt und einem zweiten axialen Abschnitt, wobei ein Durchmesser des Bolzens in dem ersten axialen Abschnitt kleiner ist als im zweiten axialen Abschnitt. In dem zweiten axialen Abschnitt können an verschiedenen Winkelabschnitten die Ausnehmungen ausgebildet sein, um die Kugeln dort aufzunehmen.

Die vorliegende Erfindung bezieht sich auf ein Verbindungssystem zur Befestigung eines Flugdatenschreibers eines Flugfahrzeuges. Das Verbindungssystem umfasst eine Gegenstelle mit einer Öffnung, wobei die Gegenstelle mit dem Flugfahrzeug verbindbar ist. Das Verbindungssystem umfasst weiter Befestigungsmittel zur Befestigung des Flugdatenschreibers und einem Kugelsperrbolzen, wie er zuvor definiert wurde. Der Kugelsperrbolzen ist zwischen der Gegenstelle und den Befestigungsmittel angeordnet und dessen hülsenförmiges Basiselement ist mit den Befestigungsmittel fest verbunden, um bei Freigabe des hülsenförmigen Basiselements den Flugdatenschreiber von der Gegenstelle zu lösen.

Optional umfasst die Gegenstelle einen zylinderförmigen (oder rohrförmigen) Hohlraum, der an einer Seite teilweise verschlossen ist, um dort die Öffnung zu bilden. Der zylinderförmige Hohlraum weist einen Innendurchmesser auf, sodass der Hohlraum für die zumindest eine Kugel bei der radialen Bewegung einen Anschlag bilden kann.

Optional umfasst das Verbindungssystem eine Treibladungseinheit mit einer Treibladungsöffnung, die relativ zu dem hülsenförmigen Basiselement derart angeangeordnet ist, dass der beim Aktivieren der Treibladungseinheit ein plötzlich anwachsender Druck ein axiales Verschieben des Arretierelement bewirkt und dadurch der Kugelsperrbolzen von der Gegenstelle freikommt.

Die vorliegende Erfindung bezieht sich auch auf einen Flugdatenschreiber für ein Flugfahrzeug. Der Flugdatenschreiber umfasst ein zuvor beschriebenes Verbindungsystem und ein Gehäuse, das mit den Verbindungsmittel des Verbindungssystems verbunden ist. Die vorliegende Erfindung bezieht sich auch auf ein Flugfahrzeug, insbesondere ein Flugzeug, mit einem der zuvor beschriebenen Verbindungsysteme.

Ausführungsbeispiele der vorliegenden Erfindung erlauben somit vorteilhafterweise zwei Öffnungsmöglichkeiten:
(1) Wie bei den konventionellen Kugelsperrbolzen (siehe Fig. 6) ist es möglich, durch ein Verschieben des Bolzens die Kugeln freizugeben und den Verschluss zu öffnen. Außerdem kann der Bolzen bei dieser Öffnungsvariante die Gegenstelle aktiv wegschieben.
(2) Eine weitere Möglichkeit, den Verschluss zu öffnen und/oder zu schließen, besteht in einem Drehen des Bolzens. Hierbei werden eindeutig die Positionen "offen" und "geschlossen" definiert, sodass eine Prüfung des zuverlässigen Schließens möglich wird.

Ausführungsbeispiele bieten die folgenden Vorteile:
- Es wird eine einfache Handhabung möglich, insbesondere ist kein Werkzeug zum Öffnen und Schließen erforderlich.
- Eine sichere und überprüfbare Montage ist gewährleistet.
- Eine einfache Wartung wird möglich, da sich alle beweglichen und zu wartenden Teile im abnehmbaren Teil befinden.

Diese Eigenschaften sind insbesondere für das spezielle Einsatzgebiet von Flugdatenschreiber, die von außen zugänglich sein sollen, von besonderem Wert.

### Kurzbeschreibung der Figuren

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt einen Kugelsperrbolzen nach einem Ausführungsbeispiel der vorliegenden Erfindung.
- Fig. 2A-2C: veranschaulichen den Prozess des Herausziehens des hülsenförmigen Basiselements für den Kugelsperrbolzen aus Fig. 1.
- Fig. 3: zeigt eine Außenansicht eines Verbindungssystems unter Nutzung des Kugelsperrbolzens aus der Fig. 1.
- Fig. 4: zeigt eine Querschnittsansicht durch den Kugelsperrbolzen entlang seiner Drehachse.
- Fig. 5: zeigt eine Querschnittsansicht durch den Kugelsperrbolzen senkrecht zur Drehachse an einer Position der Kugeln.
- Fig. 6A-6D: zeigen einen konventionellen Kugelsperrbolzen.

### Detaillierte Beschreibung

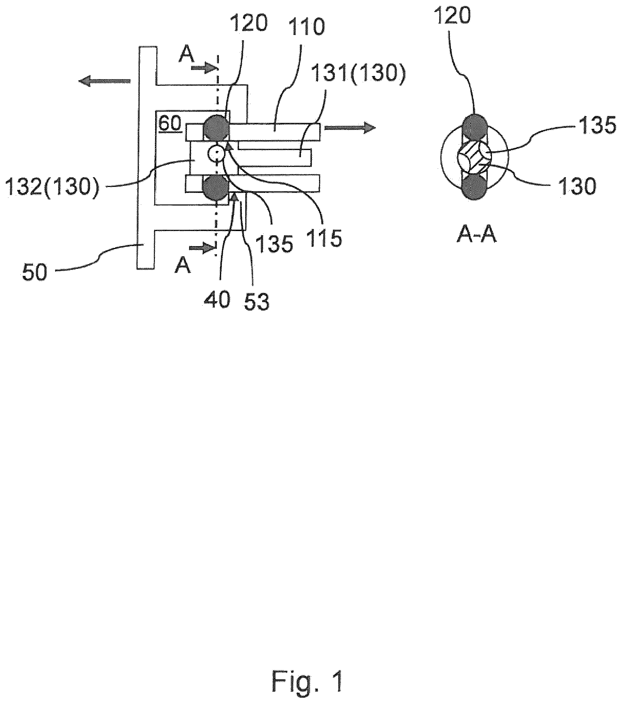

**Fig. 1** zeigt einen Kugelsperrbolzen gemäß einem Ausführungsbeispiel der vorliegenden Erfindung, der beispielsweise zum Arretieren eines Flugdatenschreibers an einer Gegenstelle 50 geeignet ist. Die Gegenstelle 50 bildet einen zylindrischen Hohlraum 60 mit einem verjüngten Endabschnitt 53, der eine Öffnung 40 in der Gegenstelle 50 definiert. Der Kugelsperrbolzen umfasst ein hülsenförmiges Basiselement 110, das einen Hohlraum in einer axialen Richtung definiert und in radialer Richtung zwei Kugelöffnungen 115 aufweist, wobei das hülhülsenförmige Basiselement 110 in die Öffnung 40 der Gegenstelle 50 in axialer Richtung einführbar ist. Der Kugelsperrbolzen umfasst außerdem zwei Kugeln 120, die sich zumindest teilweise in den Kugelöffnungen 115 befinden und eine Form aufweisen, die eine radiale Bewegung durch die Kugelöffnungen 115 ermöglichen. Der Kugelsperrbolzen umfasst außerdem ein Arretierelement 130, das in dem Hohlraum relativ zu dem Basiselement 110 zwischen einer ersten Winkelstellung und eine zweiten Winkelstellung drehbar gelagert ist und eine Form aufweist, sodass die zwei Kugeln 120 in der ersten Winkelstellung weiter aus den Kugelöffnungen 115 herausragen als in der zweiten Winkelstellung und die zwei Kugeln 120 ein Herausziehen des hülsenförmigen Basiselemente 110 in der ersten Winkelstellung des Arretierelements 130 blockieren und in der zweiten Winkelstellung ermöglichen.

Auf der linken Seite der Fig. 1 ist der Kugelsperrbolzen in einer Querschnittsansicht entlang der axialen Richtung/Drehrichtung des Kugelsperrbolzens gezeigt, während auf der rechten Seite eine Querschnittsansicht entlang des Querschnittes A-A dargestellt ist, und zwar an jener axialen Position, an der die Kugelöffnungen 115 in dem hülsenförmigen Basiselement 110 ausgebildet sind.

Bei dem gezeigten Kugelsperrbolzen weist das hülsenförmige Basiselement 110 zwei Öffnungen 115 auf, in denen in jeweils eine Kugel 120 angeordnet ist. Die Erfindung soll jedoch nicht auf die Anzahl der Kugeln 120 / Kugelöffnungen 115 eingeschränkt sein (es können auch 3 oder 4 oder noch mehr Kugeln 120 vorhanden sein. Das Arretierelement 130 ist beispielhaft als ein Bolzen ausgebildet und umfasst einen ersten axialen Abschnitt 131 und einen zweiten axialen Abschnitt 132, die ähnlich zu dem konventionellen Kugelsperrbolzen aus der Fig. 6 ausgebildet sind. Im Unterschied dazu sind aber im zweiten axialen Abschnitt 132 zusätzlich zwei gegenüberliegenden Ausnehmungen 135 ausgebildet, um die Kugeln 120 durch ein Drehen des Bolzens 130 aufzunehmen. Die Ausnehmungen 135 sind dabei so tief ausgebildet, dass die Kugeln 120 sich radial so weit in die Ausnehmungen 135 hinein bewegen, dass die Kugeln 120 nicht mehr radial (oder nur unwesentlich) aus dem hülsenförmigen Basiselement 110 herausragen. Dadurch wird ein Herausziehen des hülsenförmigen Basiselements 110 aus der Gegenstelle 50 möglich.

Die gezeigten Pfeile in der Fig. 1 veranschaulichen, dass durch eine Drehung des Bolzens 130 und einer anschließenden Aufnahme der Kugeln 120 in den Ausnehmungen 135 ein Herausziehen des hülsenförmigen Basiselements 110 (in der Fig. 1 hin zur rechten Seite) möglich ist, während die Gegenstelle 50 sich relativ nach links bewegt.

Grundsätzlich bestehen somit zwei Möglichkeiten, den Verschluss zu öffnen:
I. der Verschluss wird durch ein Drehen des Bolzens 130 montiert bzw. demontiert; und
II. durch ein Verschieben eines Bolzens 130 kann der Verschluss ebenfalls geöffnet bzw. geschlossen werden.

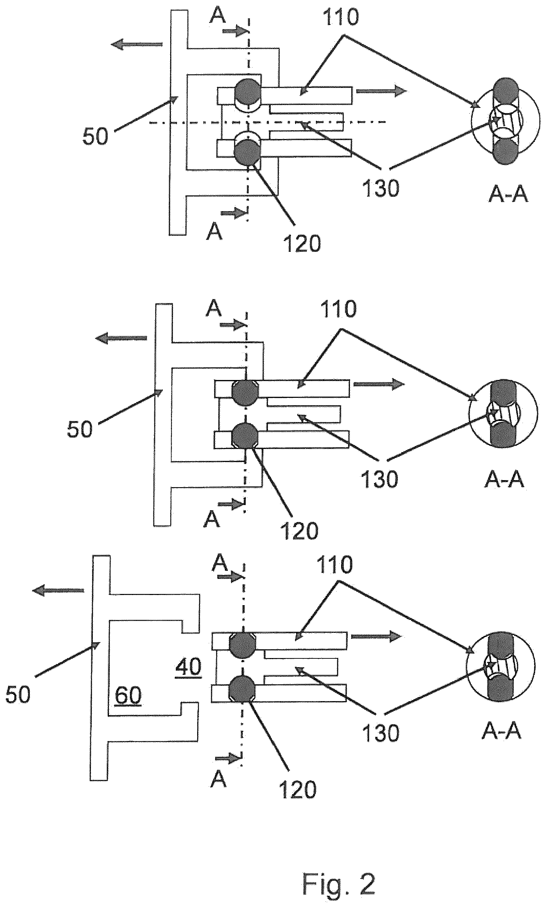

**Fig. 2A** bis **2C** veranschaulichen den Prozess des Herausziehens des hülsenförmigen Basiselements des 110 aus der Öffnung 40 der Gegenstelle 50.

In der Fig. 2A ist zunächst der Zustand gezeigt, in welchem der Bolzen 130 so weit gedreht wird, bis die Kugeln 120 durch die Ausnehmungen 135 aufgenommen werden. Die Fig. 2B zeigt jenen Zustand, bei denen die Kugeln 120 durch die Ausnehmungen 135 aufgenommen wurden. Wie ersichtlich ist, bewegen sich durch die Aufnahme der Kugeln 120 in den Ausnehmungen 135 die Kugeln 120 radial so weit nach innen, dass sie radial nicht mehr über das hülsenförmige Basiselement 110 hinausragen (oder nur unwesentlich). Als Folge kann das hülsenförmige Basiselement 110 aus der Öffnung 40 der Gegenstelle 50 herausgezogen werden. Das Resultat des Herausziehens ist in der Fig. 2C gezeigt. Die Montage erfolgt in umgekehrter Reihenfolge.

Die Besonderheit von Ausführungsbeispielen besteht nun darin, dass ein Entriegeln durch ein Verschieben des Bolzens 130 erfolgen kann, wie es bereits in der Fig. 6 beschrieben wurde, und zusätzlich dazu auch durch ein Drehen des Bolzens 130 erfolgen kann. Die weitere Öffnungsvariante durch ein Verschieben des Bolzens erfolgt in der gleichen Weise, wie es mit der Fig. 6 bereits beschrieben wurde. Eine erneute Beschreibung dieser Funktion ist hier nicht notwendig.

In der geschlossenen Position verhindert der Bolzen 130, dass die Kugeln 120 nach innen gelangen können und dadurch in dem Hohlraum 60 fixiert sind. Die Gegenstelle 50 kann sich in dieser Position von dem Kugelsperrbolzen und insbesondere von dem Basiselement 110 nicht mehr lösen.

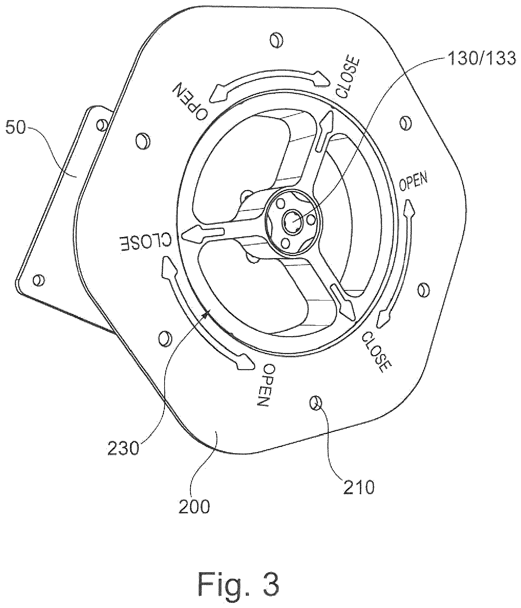

**Fig. 3** zeigt eine Außenansicht eines Verbindungssystems unter Nutzung des Kugelsperrbolzens, wie es mit den Fig. 1 und 2 (bzw. mit der Fig. 6) beschrieben wurde. In dem gezeigten Ausführungsbeispiel kann das Verbindungssystem insbesondere für einen auswerfbaren oder absprengbaren Flugdatenschreiber (nicht gezeigt) verwendet werden. In der gezeigten Außenansicht ist die Gegenstelle 50 hinten dargestellt, während im Vordergrund die Befestigungsmittel 200 dargestellt sind, die ein Befestigen des beispielhaften Flugdatenschreibers ermöglichen. Dazu sind in den Befestigungsmittel 200 beispielsweise Öffnungen 210 vorgesehen, um den Flugdatenschreiber oder ein Gehäuse desselben beispielsweise über Schraub- oder Nietverbindungen daran zu befestigen. In einem zentralen Bereich ist ein Lösesystem 230 gezeigt, welches es ermöglicht, durch Drehbewegung den Kugelsperrbolzen (in der Fig. 3 nicht gezeigt) zu lösen oder zu arretieren. Das Befestigen kann beispielsweise durch eine Drehung im Uhrzeigersinn erfolgen und das Lösen durch eine Drehung entgegen dem Uhrzeigersinn. Das Lösesystem 230 koppelt an den mittig angeordneten Bolzen 130 (oder ein damit verbundenes Drehelement), um diesen dadurch zu drehen.

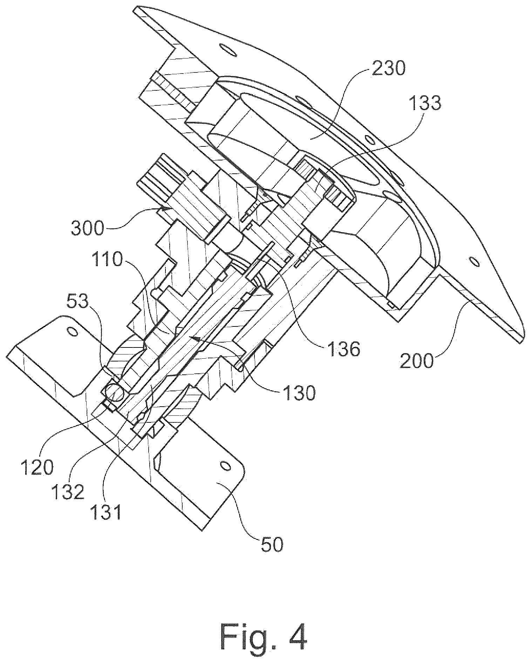

**Fig. 4** zeigt eine Querschnittsansicht durch den Kugelsperrbolzen entlang der Drehachse, um die der Bolzen 130 drehbar ist. Der Kugelsperrbolzen befindet sich zwischen der Gegenstelle 50 und den Befestigungsmittel 200 mit dem Lösesystem 230. Das Lösesystem 230 ist drehfest mit einem Drehelement 133 verbunden, das wiederum drehfest mit dem Bolzen 130 verbunden ist. Dazu kann beispielsweise ein flaches Metallstück 136 ausgebildet sein, welches die Drehbewegung des Drehelementes 133 auf den Bolzen 130 überträgt.

Die Gegenstelle 50 umfasst wiederum einen hülsenförmigen Hohlraum, in welchem der Kugelsperrbolzen eingeführt wurde, sodass die Kugeln 120 durch den zweiten axialen Abschnitt 132 blockiert werden und die Kugeln 120 ein Herausziehen des hülsenförmigen Basiselementes des 110 verhindern.

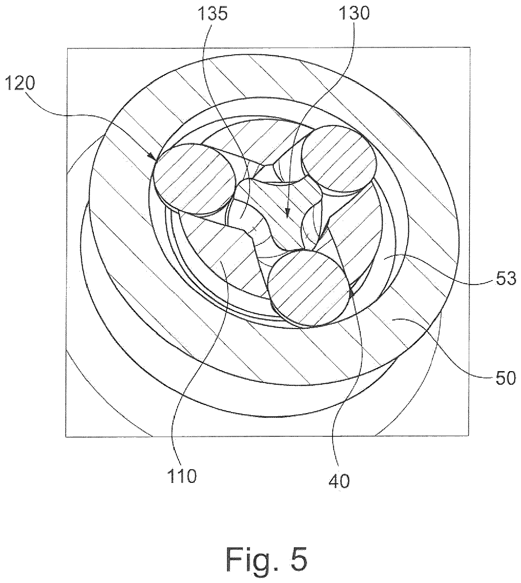

Das hülsenförmigen Basiselement 110 kann aus der Gegenstelle 50 auf zwei Arten herausgezogen werden: Der Bolzen 130 kann einerseits axial in Richtung zur Gegenstelle 50 bewegt werden, oder der Bolzen 130 wird über eine Drehung des Drehelementes 133 gedreht (siehe Fig. 2 oder Fig. 5). Bei einer axialen Bewegung des Bolzens 130 können die Kugeln 120 in dem ersten axialen Abschnitt 131 sich radial nach innen bewegen und ermöglichen so ein Herausziehen. Diese axiale Bewegung kann durch eine Treibladung einer Treibladungseinheit 300 initiiert werden. Die Treibladungseinheit 300 ist beispielsweise ausgebildet, um auf ein Zünden der Treibladung einen Druck zwischen dem Drehelement 133 und dem Bolzen 130 zu erhöhen. Dies führt dazu, dass der Bolzen 130 axial nach unten getrieben wird und so die Kugeln 120 in den ersten axialen Abschnitt 131 gelangen. Wenn sich die Kugeln 120 in dem verjüngten Abschnitt befinden und sich der Bolzen 130 nicht weiter nach unten bewegen kann (dazu ist ein Anschlag unten vorhanden), wird eine Kraft auf das hülsenförmiges Basiselement 110 ausgeübt. Beispielsweise wird das Drehelement 133, das einen Anschlag mit dem Basiselement 110 hat, nach außen getrieben und zieht das Basiselement 110 und die Befestigungsmittel 200 mit. Daher bewegen sich zu diesem Zeitpunkt das Basiselement 110 zusammen mit den Kugeln 120 axial weg von der Gegenstelle 50 (nach oben in der Fig. 4), während der Bolzen 130 an einer Position relativ zu der Gegenstelle 50 verbleibt und somit den Gegendruck bereitstellt. Auf diese Weise wird ein Absprengen des an den Befestigungsmitteln befestigten Flugdatenschreibers bewirkt.

Der verjüngte Abschnitt im ersten axialen Abschnitt 131 kann - mit Ausnahme des zweiten axialen Abschnittes 132 - entlang der gesamten axialen Erstreckung des Bolzens 130 ausgebildet sein. Die Kugeln 120 können auf diese Weise entlang des Bolzens 130 nach außen befördert werden. Es ist aber ebenfalls möglich, dass der erste axiale (verjüngte) Abschnitt 131 nur lokal ausgebildet ist, wobei dann die Kugeln 120 die Möglichkeit haben, um nach dem Passieren der Einengung 53 der Gegenstelle 50 sich wiederum radial nach außen zu bewegen, um auf diese Weise ein Absprengen des Befestigungssystems 200 zu ermöglichen.

**Fig. 5** zeigt eine Querschnittsansicht durch den Bolzen 130 senkrecht zu dessen Drehachse, und zwar an einer Position, wo die Kugeln 120 und die Ausnehmungen 135 in der Gegenstelle 50 angeordnet sind. Die Kugeln 120 werden durch den Bolzen 130 in ihrer radialen Bewegung blockiert und arretieren somit das hülsenförmige Basiselement 110 hinter der Verjüngung 53 der Gegenstelle 50.

In dem gezeigten Ausführungsbeispiel sind beispielhaft drei Kugeln 120 regelmäßig entlang des Umfanges des hülsenförmigen Basiselements 110 angeordnet. Die drei Kugeln 120 können sich bei vorbestimmten Winkelpositionen des Bolzens 130 radial nach innen bewegen. Dazu sind drei Ausnehmungen 135 vorgesehen, die eine radiale Bewegung der Kugeln 120 soweit erlauben, dass das Basiselement 110 bei dieser Drehposition des Bolzens 130 sich zusammen mit den Kugeln 120 aus der Gegenstelle 50 durch den verjüngten Abschnitt 53 hindurch bewegen kann.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### Bezugszeichenliste

- 40: Öffnung
- 50, 650: Gegenstelle
- 53: Endabschnitt
- 60: rohrförmiger Hohlraum
- 110, 610: hülsenförmiges Basiselement
- 115: Kugelöffnung
- 120, 620: Kugel(n)
- 130: Arretierelement
- 131, 132: axiale Abschnitte
- 133: drehbares Element
- 135: Ausnehmung(en)
- 136: flaches Metallstück
- 200: Befestigungsmittel
- 210: Befestigungselemente
- 230: Lösemechanismus
- 300: Treibladungseinheit

## Patentansprüche

1. Kugelsperrbolzen als Befestigungsmittel zum Arretieren, insbesondere eines Flugdatenschreibers, an einer Gegenstelle (50), wobei die Gegenstelle (50) eine Öffnung (40) aufweist, der Kugelsperrbolzen umfasst:
ein hülsenförmiges Basiselement (110), das einen Hohlraum in einer axialen Richtung definiert und in radialer Richtung zumindest eine Kugelöffnung (115) aufweist, wobei das hülsenförmige Basiselement (110) in die Öffnung (40) der Gegenstelle (50) in axialer Richtung einführbar ist;
zumindest eine Kugel (120), die sich zumindest teilweise in der Kugelöffnung (115) befindet und eine Form aufweist, die eine radiale Bewegung in der Kugelöffnung (115) ermöglicht; und
ein Arretierelement (130), das in dem Hohlraum relativ zu dem Basiselement (110) zwischen einer ersten Winkelstellung und einer zweiten Winkelstellung drehbar ist und eine Form aufweist, sodass die zumindest eine Kugel (120) in der ersten Winkelstellung weiter aus der Kugelöffnung herausragt als in der zweiten Winkelstellung und dadurch die herausragende zumindest eine Kugel (120) ein Herausziehen aus der Gegenstelle (50) des hülsenförmigen Basiselemente (110) in der ersten Winkelstellung blockieren kann und das Herausziehen in der zweiten Winkelstellung möglich ist,
**dadurch gekennzeichnet, dass** das Arretierelement (130) einen Bolzen aufweist, der in dem Hohlraum des hülsenförmigen Basiselements (110) axial verschiebbar ist und eine Vertiefung in einem ersten axialen Abschnitt (131) aufweist, sodass die zumindest eine Kugel (120) auf eine axiale Verschiebung aus der ersten Winkelstellung des Arretierelementes (130) in die Vertiefung des ersten axialen Abschnitts (131) gelangt und dadurch das hülsenförmige Basiselement (110) ebenfalls aus der Gegenstelle (50) herausziehbar ist.

2. Kugelsperrbolzen nach Anspruch 1, wobei das Arretierelement (130) zumindest eine Ausnehmung (135) aufweist, um die Kugel (120) in der zweiten Winkelstellung aufzunehmen, oder zumindest eine Erhebung aufweist, um die Kugel (120) in der ersten Winkelstellung radial nach außen zu drücken.

3. Kugelsperrbolzen nach einem der vorhergehenden Ansprüche,
wobei die zumindest eine Kugel (120) mehrere Kugeln aufweist und das hülsenförmige Basiselement (110) entlang des Umfanges mehrere Kugelöffnungen (115) aufweist, um jeweils eine Kugel (120) aufzunehmen,
und wobei das Arretierelement (130) zu jeder Kugel (120) jeweils eine zugehörige Ausnehmung (135) aufweist, um die jeweilige Kugel (120) in der zweiten Winkelstellung aufzunehmen.

4. Kugelsperrbolzen nach Anspruch 2 oder Anspruch 3, zurückbezogen auf Anspruch 2, wobei das Arretierelement (130) einen stufenförmigen Bolzen mit einem ersten axialen Abschnitte (131) und einem zweiten axialen Abschnitt (132) umfasst, wobei ein Durchmesser des Bolzens (130) im ersten axialen Abschnitt (131) kleiner ist als im zweiten axialen Abschnitt (132), und wobei in dem zweiten axialen Abschnitt (132) an verschiedenen Winkelabschnitte Ausnehmungen (135) ausgebildet sind, um die Kugeln (120) dort aufzunehmen.

5. Verbindungssystem zur Befestigung eines Flugdatenschreibers eines Flugfahrzeuges, mit:
einer Gegenstelle (50) mit einer Öffnung (40), die mit dem Flugfahrzeug verbindbar ist;
Befestigungsmittel (200) zur Befestigung des Flugdatenschreibers; und
einem Kugelsperrbolzen nach einem der vorhergehenden Ansprüche, der zwischen der Gegenstelle (50) und den Befestigungsmittel (200) angeordnet ist und dessen hülsenförmiges Basiselement (110) mit den Befestigungsmittel (200) fest verbunden ist, um bei Freigabe des hülsenförmigen Basiselements (110) den Flugdatenschreiber von der Gegenstelle (50) zu lösen.

6. Verbindungssystem nach Anspruch 5, wobei die Gegenstelle (50) einen zylinderförmigen Hohlraum (60) umfasst, der an einer Seite teilweise verschlossen ist, um dort die Öffnung (40) zu bilden, und der Hohlraum (60) einen Innendurchmesser aufweist, sodass der Hohlraum (60) für die zumindest eine Kugel (120) bei der radialen Bewegung einen Anschlag bildet.

7. Verbindungssystem nach Anspruch 5 oder Anspruch 6, das weiter
eine Treibladungseinheit (300) mit einer Treibladungsöffnung umfasst, die relativ zu dem hülsenförmigen Basiselement (110) derart angeordnet ist, dass der beim Aktivieren der Treibladungseinheit (300) plötzlich anwachsende Druck ein axiales Verschieben des Arretierelement (130) bewirkt und dadurch der Kugelsperrbolzen von der Gegenstelle (50) freikommt.

8. Flugdatenschreiber für ein Flugfahrzeug mit:
einem Verbindungsystem nach einem der Ansprüche 5 bis 7; und
einem Gehäuse, das mit den Verbindungsmittel (200) des Verbindungssystems verbunden ist.

9. Flugfahrzeug, insbesondere Flugzeug, mit einem Verbindungsystem nach einem der Ansprüche 5 bis 7.

## Claims

1. Ball lock pin as a fastening means for locking, in particular, a flight recorder on a counterpart (50), the counterpart (50) having an opening (40), the ball lock pin comprising:
a sleeve-shaped main element (110) which defines a cavity in an axial direction and has at least one ball opening (115) in the radial direction, the sleeve-shaped main element (110) being insertable into the opening (40) of the counterpart (50) in the axial direction;
at least one ball (120) that is located at least partially in the ball opening (115) and has a shape that allows a radial movement in the ball opening (115); and
a locking element (130) which is rotatable in the cavity relative to the main element (110) between a first angular position and a second angular position and has a shape such that the at least one ball (120) protrudes further from the ball opening in the first angular position than in the second angular position and the protruding at least one ball (120) can thereby block a pulling-out from the counterpart (50) of the sleeve-shaped main element (110) in the first angular position and pulling-out is possible in the second angular position,
**characterized in that**
the locking element (130) has a pin which is axially slidable in the cavity in the sleeve-shaped main element (110) and has a recess in a first axial portion (131) such that the at least one ball (120) axially slides from the first angular position of the locking element (130) into the recess of the first axial portion (131) and the sleeve-shaped main element (110) can thereby also be pulled out of the counterpart (50).

2. Ball lock pin according to claim 1, wherein the locking element (130) has at least one recess (135) to receive the ball (120) in the second angular position, or at least one elevation to push the ball (120) radially outward in the first angular position.

3. Ball lock pin according to either of the preceding claims,
wherein the at least one ball (120) has a plurality of balls and the sleeve-shaped main element (110) has a plurality of ball openings (115) along the circumference in order to receive one ball (120) each,
and wherein the locking element (130) has an associated recess (135) for each ball (120) in order to receive the relevant ball (120) in the second angular position.

4. Ball lock pin according to claim 2 or claim 3 when dependent on claim 2, wherein the locking element (130) comprises a stepped pin having a first axial portion (131) and a second axial portion (132), wherein a diameter of the pin (130) in the first axial portion (131) is smaller than in the second axial portion (132), and wherein recesses (135) are formed in the second axial portion (132) at different angular portions in order to receive the balls (120) there.

5. Connection system for fastening a flight recorder of an aircraft, comprising:
a counterpart (50) which has an opening (40) and can be connected to the aircraft;
fastening means (200) for fastening the flight recorder; and
a ball lock pin according to any of the preceding claims, which is arranged between the counterpart (50) and the fastening means (200) and the sleeve-shaped main element (110) of which is firmly connected to the fastening means (200) in order to release the flight recorder from the counterpart (50) when the sleeve-shaped main element (110) is released.

6. Connection system according to claim 5, wherein the counterpart (50) comprises a cylindrical cavity (60) which is partially closed on one side in order to form the opening (40) there, and the cavity (60) has an inner diameter such that the cavity (60) forms a stop for the at least one ball (120) during the radial movement.

7. Connection system according to either claim 5 or claim 6, further comprising
a propellant charge unit (300) which has a propellant charge opening and is arranged relative to the sleeve-shaped main element (110) in such a way that the pressure suddenly increasing when the propellant charge unit (300) is activated causes the locking element (130) to axially slide and the ball lock pin is thereby freed from the counterpart (50).

8. Flight recorder for an aircraft, comprising:
a connection system according to any of claims 5 to 7; and
a housing which is connected to the connection means (200) of the connection system.

9. Aircraft, in particular airplane, comprising a connection system according to any of claims 5 to 7.

## Revendications

1. Boulon de blocage à billes comme moyen de fixation destiné au verrouillage, en particulier d'un enregistreur de paramètres de vol, dans un poste correspondant (50), dans lequel le poste correspondant (50) présente une ouverture (40), le boulon de blocage à billes comprend :
un élément de base en forme de manchon (110) qui définit une cavité dans une direction axiale et présente au moins une ouverture à bille (115) dans une direction radiale, l'élément de base en forme de manchon (110) pouvant être inséré dans l'ouverture (40) du poste correspondant (50) dans la direction axiale ;
au moins une bille (120) qui se trouve au moins en partie dans l'ouverture à bille (115) et présente une forme qui permet un mouvement radial dans l'ouverture à bille (115) ; et
un élément de verrouillage (130) pouvant tourner dans la cavité par rapport à l'élément de base (110) entre une première position angulaire et une seconde position angulaire et qui présente une forme de sorte que l'au moins une bille (120) fait saillie plus loin de l'ouverture à bille dans la première position angulaire que dans la seconde position angulaire, et ainsi l'au moins une bille (120) en saillie peut bloquer le retrait du poste correspondant (50) de l'élément de base en forme de manchon (110) dans la première position angulaire et permet le retrait dans la seconde position angulaire,
**caractérisé en ce que**
l'élément de verrouillage (130) présente un boulon qui peut être déplacé de manière axiale dans la cavité de l'élément de base en forme de manchon (110) et présente un creux dans une première section axiale (131), de sorte que l'au moins une bille (120), lors d'un déplacement axial à partir de la première position angulaire de l'élément de verrouillage (130), pénètre dans le creux de la première section axiale (131) et l'élément de base en forme de manchon (110) peut ainsi également être retiré du poste correspondant (50).

2. Boulon de blocage à billes selon la revendication 1, dans lequel l'élément de verrouillage (130) présente au moins un évidement (135) pour recevoir la bille (120) dans la seconde position angulaire, ou présente au moins une élévation pour pousser la bille (120) radialement vers l'extérieur dans la première position angulaire.

3. Boulon de blocage à billes selon l'une des revendications précédentes,
dans lequel l'au moins une bille (120) présente plusieurs billes, et l'élément de base en forme de manchon (110) présente une pluralité d'ouvertures à billes (115) le long du périmètre pour recevoir chacune une bille (120),
et dans lequel l'élément de verrouillage (130) présente un évidement (135) associé respectif pour chaque bille (120) pour recevoir la bille (120) respective dans la seconde position angulaire.

4. Boulon de blocage à billes selon la revendication 2 ou la revendication 3, lorsqu'elle dépend de la revendication 2, dans lequel l'élément de verrouillage (130) comprend un boulon en forme de gradin comportant une première section axiale (131) et une seconde section axiale (132), un diamètre du boulon (130) étant plus petit dans la première section axiale (131) que dans la seconde section axiale (132), et des évidements (135) étant réalisés dans la seconde section axiale (132) au niveau des différentes sections angulaires pour y recevoir les billes (120).

5. Système de liaison permettant de fixer un enregistreur de paramètres de vol d'un aéronef, comportant :
un poste correspondant (50) comportant une ouverture (40) qui peut être reliée à l'aéronef ;
des moyens de fixation (200) permettant de fixer l'enregistreur de paramètres de vol ; et
un boulon de blocage à billes selon l'une des revendications précédentes, lequel est disposé entre le poste correspondant (50) et les moyens de fixation (200) et dont l'élément de base en forme de manchon (110) est relié de manière fixe aux moyens de fixation (200) pour libérer l'enregistreur de paramètres de vol du poste correspondant (50) lors de la libération de l'élément de base en forme de manchon (110).

6. Système de liaison selon la revendication 5, dans lequel le poste correspondant (50) comprend une cavité (60) cylindrique qui est en partie fermée sur un côté pour y former l'ouverture (40), et la cavité (60) présente un diamètre intérieur de sorte que la cavité (60) forme une butée pour l'au moins une bille (120) pendant le mouvement radial.

7. Système de liaison selon la revendication 5 ou 6, qui comprend en outre
une unité de charge propulsive (300) comportant une ouverture de charge propulsive qui est disposée par rapport à l'élément de base en forme de manchon (110) de telle sorte que la pression qui augmente soudainement lors de l'activation de l'unité de charge propulsive (300) provoque un déplacement axial de l'élément de verrouillage (130) et que le boulon de blocage à billes est ainsi libéré du poste correspondant (50).

8. Enregistreur de paramètres de vol pour un aéronef comportant :
un système de liaison selon l'une des revendications 5 à 7 ; et
un boîtier qui est relié aux moyens de liaison (200) du système de liaison.

9. Aéronef, en particulier avion, comportant un système de liaison selon l'une des revendications 5 à 7.
